(19) Europäisches Patentamt / European Patent Office / Office européen des brevets

(11) **EP 4 396 883 B1**

(12) **EUROPEAN PATENT SPECIFICATION**

(45) Date of publication and mention of the grant of the patent:
**24.12.2025 Bulletin 2025/52**

(21) Application number: **21773042.3**

(22) Date of filing: **01.09.2021**

(51) International Patent Classification (IPC):
*H01M 8/18* (2006.01)

(52) Cooperative Patent Classification (CPC):
**H01M 8/188; H01M 2300/0011; Y02E 60/50**

(86) International application number:
**PCT/EP2021/074182**

(87) International publication number:
**WO 2023/030625 (09.03.2023 Gazette 2023/10)**

(54) **REDOX FLOW BATTERY**

REDOX-DURCHFLUSSBATTERIE

BATTERIE REDOX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.07.2024 Bulletin 2024/28**

(73) Proprietor: **Green Energy Storage S.r.l.**
**38123 Trento (TN) (IT)**

(72) Inventors:
• **PUCHER, Ilaria**
**38123 Trento (TN) (IT)**
• **MUSELLA, Elisa**
**38121 TRENTO (TN) (IT)**

(74) Representative: **Palladino, Saverio Massimo et al**
**Notarbartolo & Gervasi S.p.A.**
**Viale Achille Papa, 30**
**20149 Milano (IT)**

(56) References cited:
**CN-A- 105 470 508     JP-A- 2016 103 386**

• **JENS NOACK ET AL: "The Chemistry of Redox-Flow Batteries", ANGEWANDTE CHEMIE INTERNATIONAL EDITION, vol. 54, no. 34, 26 June 2015 (2015-06-26), pages 9776 - 9809, XP055634828, ISSN: 1433-7851, DOI: 10.1002/anie.201410823**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 396 883 B1

**Description**

**FIELD OF THE INVENTION**

The invention relates to a redox flow battery, to an energy storage system including said redox flow battery, as well as to methods for delivering and/or storing electricity by means of said redox flow battery.

**BACKGROUND**

Global energy demand doubles every 15 years, and it is forecasted to keep on increasing in the next future with a parallel growing and urgent demand of high-energy resources. However, more than 60% of the global electrical energy is produced from coal and from natural gas with an associated huge emission of $CO_2$, which is considered the main contributor to greenhouse effect and global warming.

Because of such detrimental environmental effects, replacing fossil fuels with renewable energy sources - primarily with wind and solar energy - has become imperative. The most relevant problem is that they are intermittent and cannot guarantee a continuous flow of energy. Since our reliance on renewable energy needs to grow, there is an increasing need to store it for times when energy cannot be harvested.

Among possible alternatives, electrochemical storage and conversion plays a key role. Researchers are focusing their attention on finding new materials in order to boost performance: environmental sustainability is essential considering the urgent need for large-scale production and diffusion.

Redox flow batteries (RFBs) offer a unique advantage of energy and power independence. RFBs consist of tanks of electrolyte that store chemical energy and electrochemical cells that reversibly convert chemical energy into electrical energy.

Various types of RFBs have been developed up to now, and they can be classified into two types according to the electrolyte: aqueous and non-aqueous RFBs. Aqueous ones offer advantages in terms of safety, toxicity, and cost over their non-aqueous counterparts.

Although the energy storage systems that use aqueous RFBs are the subject of considerable and ever-increasing interest given their potential, to date the Applicant has found that significant technological and functional limits remain in this sector.

Among various aqueous RFBs, all vanadium RFBs are today the most mature technology and have been used in practical applications, such as load leveling and peak shaving. Vanadium is often used for both positive and negative half-cells, which avoids the permanent loss of capacity problems caused by crossover. However, high cost and limited resources of vanadium hinder the worldwide commercialization, so that new active materials alternative to vanadium are an active research focus area.

Furthermore, the Applicant has found that aqueous RFBs still suffer the constrain of having a narrow cell voltage, because of the electrochemical stability window determined by the reductive and oxidative reactions of salts and water in the aqueous electrolyte.

In addition, for RFBs the kinetics of the reversibility (and hence rechargeability) of the redox reactions that take place within such a window is even more demanding, considering that a necessary condition for a battery to be rechargeable is that the underlying chemical reactions that occur during discharge must be efficiently reversed when the cell is charged. This means that the battery must be able to undergo the reverse reactions efficiently, so that thousands of charge-discharge cycles are possible without remarkable fading in performance. An irreversible or an only partially reversible reaction will result in dramatic decrease of battery capacity and performance over cycles, and therefore poor battery cyclability and efficiency. Molecules that undergo highly reversible reactions are essential for long cycle life of more than 10000 cycles, a key feature of RFBs.

Finally, the Applicant has also noted that electrolytes for aqueous RFBs should be low cost, highly soluble, and have redox potentials as close as possible to the edge of the water electrochemical window so that potentially high energy densities can be achieved, in order to be competitive with traditional batteries.

In the prior art, energy storage systems based on the chemistry of titanium have been proposed.

Patent application CN 105470508 A discloses the production of titanium niobate ($TiNb_2O_7$) in nanoparticle form via a sol-gel preparation route; this form of titanium niobate is said useful in energy storage systems; however, no RFB using this material is described in this document.

The review "The chemistry of redox-flow batteries", J. Noack et al., Angewandte Chemie Int. Ed., 2015, 54, 9776-9809, discloses RFBs batteries based, among other, on titanium species such as $TiCl_4$.

Patent application JP 2016-103386 A discloses an aqueous electrolytic solution for a RFB in which an electrode may be made of titanium but does not disclose an aqueous electrolyte comprising titanium ions.

A first object of the present invention is therefore to provide a redox flow battery capable of reducing and/or solving the aforementioned problems.

## SUMMARY OF INVENTION

In accordance with the present invention, the Applicant has surprisingly found out that these desired characteristics can be achieved by using an aqueous electrolyte comprising titanium ions as active material and an anionic surfactant, in which said anionic surfactant is at a concentration below its critical micellar concentration (CMC).

Said aqueous electrolyte, combining titanium ions as active material and an anionic surfactant at a concentration below its critical micellar concentration, widens the electrolyte electrochemical stability window, hindering hydrogen evolution, increases titanium redox reaction reversibility, making it faster, and allows to achieve high energy densities in an RFB.

Therefore, in a first aspect the present invention relates to a redox flow battery comprising an aqueous electrolyte comprising at least one titanium ion and at least one anionic surfactant, wherein said at least one anionic surfactant is at a concentration below the critical micellar concentration.

The operating principle of the redox flow battery according to the present invention is based on the titanium redox couple. Titanium redox couple is low cost and has an interesting low redox potential, (equation 1) E°=-0.09 V vs SHE,

$$Ti^{3+} + H_2O \rightleftarrows TiO^{2+} + 2H^+ + e^- \qquad (1)$$

which is right below the lower voltage limit of the electrochemical stability window of an aqueous acid solution (0 to 1.23 V vs SHE), at which hydrogen redox reaction occurs ($E^0_{H2}$ = 0.0V vs SHE):

$$H^+ + e^- \leftrightharpoons \frac{1}{2}H_2 \qquad (2)$$

Giving the two potentials, the two reactions occur at potentials that are very close to each other and in the same voltage window: hydrogen evolution is therefore an unwanted parasitic reaction which limits the applicability of Ti as redox couple in aqueous electrolyte.

The Applicant has now found out that an aqueous electrolyte comprising titanium ions as active material and an anionic surfactant at a concentration below its critical micellar concentration hinders hydrogen evolution reaction and therefore prevents both side reactions and unwanted gas formation, that would occur almost simultaneously to titanium reduction and would undermine the cell performance. The addition of an anionic surfactant at a concentration below CMC widens the electrolyte electrochemical stability window and permits a faster reversibility of the titanium redox reaction, leading to a better operation of the RFB.

Moreover, titanium salts have high solubility in water (as high as 5 molar), allowing for very high energy density with a proper catholyte choice.

In a further aspect, the present invention relates to the use of an anionic surfactant at a concentration below its critical micelle concentration in an aqueous electrolyte comprising at least one titanium ion, for widening the solution electrochemical stability window, preventing hydrogen evolution to occur and improving the reversibility of the redox reaction in said electrolyte.

The advantages of the use according to this further aspect have been already outlined with reference to the above redox flow battery according to the first aspect of the invention and are not repeated herewith.

In a still further aspect, the present invention relates also to an energy storage or delivery system comprising at least one redox-flow battery according to the first aspect of the present invention and at least one connection means apt to connect said at least one redox-flow battery to an external power source or to a load.

The advantages of the energy storage or delivery system according to this further aspect have been already outlined with reference to the above redox flow battery according to the first aspect of the invention and are not repeated herewith.

## BRIEF DESCRIPTION OF THE DRAWINGS

Figure 1 shows the cyclic voltammetries recorded when studying the redox reactions with the electrolytes in Example 1;

Figure 2 shows the cyclic voltammetries recorded when studying the redox reactions with the electrolytes in Example 2; and

Figure 3 shows the cyclic voltammetries recorded when studying the redox reactions with the electrolytes in Example 3.

## DETAILED DESCRIPTION OF THE INVENTION

In a first aspect, the present invention relates to a redox flow battery comprising an aqueous electrolyte comprising at least one titanium ion and at least one anionic surfactant, wherein said at least one anionic surfactant is at a concentration below the critical micellar concentration.

The Applicant has indeed found out that an aqueous electrolyte comprising titanium ions as active material and an anionic surfactant at a concentration below its critical micellar concentration hinders hydrogen evolution reaction and therefore prevents both side reactions and unwanted gas formation, that would occur almost simultaneously to titanium reduction and would undermine the cell performance. The addition of an anionic surfactant at a concentration below CMC widens the electrolyte electrochemical stability window and permits a faster reversibility of the titanium redox reaction, leading to a better operation of the RFB.

Moreover, titanium salts have high solubility in water (as high as 5 molar), allowing for very high energy density with a proper catholyte choice.

Within the framework of the present description and in the subsequent claims, except where otherwise indicated, all the numerical entities expressing amounts, parameters, percentages, and so forth, are to be understood as being preceded in all instances by the term "about". Also, all ranges of numerical entities include all the possible combinations of the maximum and minimum values and include all the possible intermediate ranges, in addition to those specifically indicated herein below.

The present invention may present in one or more of the above aspects one or more of the characteristics disclosed hereinafter.

The aqueous electrolyte of the RFB according to the present invention comprises at least one titanium ion.

Preferably, said at least titanium ion is selected from the group consisting of: trivalent titanium ion ($Ti^{3+}$) and tetravalent titanium ion ($Ti^{4+}$ or $TiO^{2+}$).

Preferably, the concentration of said at least titanium ion in the aqueous electrolyte is of from 0.1 to 5 M, more preferably of from 2 to 5 M.

In the aqueous electrolyte of the RFB according to the present invention, said at least one titanium ion (which might be $Ti^{3+}$, $Ti^{4+}$ or $TiO^{2+}$) advantageously has a counter ion. Said counter ion is preferably selected from the group consisting of $SO_4^{2-}$, $Cl^-$, $Br^-$, and $NO_3^-$.

The aqueous electrolyte of the RFB according to the present invention comprises at least one anionic surfactant at a concentration below its critical micellar concentration. Critical micellar concentration is a characteristic feature of each surfactant, and in general is the concentration above which said surfactant starts forming micelles in solution. In the context of the present invention, with the expression "critical micellar concentration" is meant the concentration of surfactants above which micelles form and all additional surfactants added to the system will form micelles, and the skilled may therefore easily determine it by routine methods. The value of the CMC for a given dispersant in a given medium depends on temperature, pressure, and on the presence and concentration of other surface-active substances and electrolytes For example, the value of CMC for sodium dodecyl sulfate in water (without other additives or salts) at 25 °C, atmospheric pressure, is $8 \times 10^{-3}$ mol/L.

The Applicant has surprisingly found out that the aqueous electrolyte comprising an anionic surfactant at a concentration below its critical micellar concentration allows widening the electrolyte electrochemical stability window, preventing hydrogen reactions to occur, and improving the reversibility of the titanium redox reaction, leading to a better operation of the RFB.

Preferably, said at least one anionic surfactant is at a concentration of from 0.001 CMC to less than 1 CMC, preferably from 0.1 to 0.9 CMC.

Preferably, said at least one anionic surfactant is an alkyl sulphate.

Preferably, said alkyl sulphate is selected from the group consisting of: sodium decyl sulphate, sodium dodecyl sulphate, sodium octadecyl sulphate.

In a preferred embodiment, the aqueous electrolyte of the RFB according to the present invention comprises sodium dodecyl sulphate at a concentration of from 0.001 CMC to less than 1 CMC, preferably from 0.1 to 0.9 CMC.

Preferably, the aqueous electrolyte has a pH lower than or equal to 4, more preferably lower than 2.

In this pH range, the Applicant has indeed found out possible ways to optimize the performances of the aqueous electrolyte according to the invention.

Preferably, the aqueous electrolyte of the redox flow battery comprises at least one acid, more preferably selected from the group consisting of sulfuric acid, hydrochloric acid, and nitric acid.

As the skilled person knows, to ensure a high energy density, the redox potential difference between anolyte and catholyte should advantageously be as high as possible. Competitive RFB electrolytes in water-based solvents should advantageously possess redox potentials as close as possible to the edges of the water electrochemical window, outstanding water solubility, high structural stability, rapid redox reaction kinetics, eminent diffusivity, and low cost.

To pursue this objective, the catholyte, which will be paired with the titanium one, should advantageously be preferably acidic, guarantee a high solubility and ensure high redox potential. In an embodiment of the present invention, the catholyte is preferably selected from the group consisting of: manganese-, halogen-, iron- and vanadium-containing species, cathecolamine, 5,8-dihydroxy-2,3-phthalazine and its derivatives, methylene blue, N- hydroxyphthalimide, chlorpromazine.

Basic construction components of a redox flow battery are a first half-cell including a first electrode, a second half cell including a second electrode, and a separator membrane arranged between said first and second half-cells. Said basic construction components have features and may be assembled according to any well-known common praxis in the relevant art for carrying out its charging/discharging operations.

For example, the first and second electrodes can be made of any suitable and conductive material known to the skilled person for operating a redox flow battery.

In an exemplary and non-limiting embodiment, the electrode of the first half cell can advantageously be made of a high surface area conducting material, like for example an inexpensive carbon electrode, with or without a catalyst.

The electrode of the second half cell can be made of a conducting porous substrate, with or without a catalyst on it.

In the redox flow battery according to the present invention, both half cells are apt to circulate an aqueous electrolyte, and one of them is apt to circulate the aqueous electrolyte comprising at least one titanium ion and at least one anionic surfactant, wherein said at least one anionic surfactant is at a concentration below the critical micellar concentration.

In an embodiment of the present invention, the redox flow battery therefore includes a first half-cell including a first electrode, a second half cell including a second electrode, and a separator membrane arranged between said first and second half-cells, and said first half-cell is apt to circulate an aqueous electrolyte comprising at least one titanium ion and at least one anionic surfactant, wherein said at least one anionic surfactant is at a concentration below the critical micellar concentration.

In said embodiment, the second half cell is not particularly limited and is apt to circulate an electrolyte comprising an active species that couples with the titanium ions of the aqueous electrolyte according to the invention.

Preferably, said second half cell is apt to circulate an aqueous electrolyte comprising an electroactive species having an E° of at least 0.5 V higher than the E° of reaction I:

$$Ti^{3+} + H_2O \rightleftarrows TiO^{2+} + 2H^+ + e^- \qquad (I).$$

Preferably, said electroactive species is selected from the group consisting of: manganese-containing species, halogen-containing species, iron-containing species, vanadium-containing species, cathecolamine, 5,8-dihydroxy-2,3-phthalazine and its derivatives, methylene blue, N- hydroxyphthalimide, chlorpromazine.

The operation temperature of the battery according to the present invention is only limited by the aqueous solution temperature stability, meaning that no solidification or evaporation should happen to the said electrolyte.

According to an embodiment of the present invention, the cell operates at room temperature.

Thanks to the unexpected effect deriving from the presence of an anionic surfactant at a concentration below its critical micellar concentration, the aqueous electrolyte of the redox flow battery according to the present invention achieves a widened electrochemical stability window, in which titanium redox reaction can occur without interference of hydrogen redox reaction (that is hindered), and a better reversibility of the titanium redox reaction, leading to an enhanced operation of the RFB.

In a further aspect, the present invention relates therefore to the use of an anionic surfactant at a concentration below its critical micellar concentration in an aqueous electrolyte comprising at least one titanium ion, for widening the electrochemical stability window, preventing hydrogen reactions to occur and improving the reversibility of the redox reaction in said electrolyte.

The advantages and the preferred features of the use of said anionic surfactant at a concentration below its critical micellar concentration according to this further aspect have already been outlined with reference to the above redox flow battery according to the first aspect of the invention and are not repeated herewith.

Preferably in the use according to this further aspect of the invention, said at least titanium ion is selected from the group consisting of: trivalent titanium ion and tetravalent titanium ion.

Preferably, in the use according to this further aspect of the invention, the concentration of said at least titanium ion in the aqueous electrolyte is of from 0.1 to 5 M, more preferably of from 2 to 5 M.

In the use according to this further aspect of the invention, said at least one titanium ion advantageously has a counter ion. Said counter ion is preferably selected from the group consisting of $SO_4^{2-}$, $Cl^-$, $Br^-$, $NO_3^-$.

Preferably, in the use according to this further aspect of the invention, said at least one anionic surfactant is an alkyl sulphate.

Preferably, in the use according to this further aspect of the invention, said alkyl sulphate is selected from the group consisting of: sodium decyl sulphate, sodium dodecyl sulphate, sodium octadecyl sulphate.

In a preferred embodiment of the use according to this further aspect of the invention, the electrolyte of the RFB according to the present invention comprises sodium dodecyl sulphate at a concentration of from 0.001 CMC to less than 1 CMC, preferably from 0.1 to 0.9 CMC.

Preferably, in the use according to this further aspect of the invention, the electrolyte of said first half cell a pH lower than or equal to 4, more preferably lower than 2.

In this pH range, the Applicant has indeed found out ways to optimize the performances of the electrolyte according to the invention through the use of an anionic surfactant at a concentration below its critical micellar concentration.

Preferably, in the use according to this further aspect of the invention the aqueous electrolyte of the redox flow battery comprises at least one acid, more preferably selected from the group consisting of sulfuric acid, hydrochloric acid, and nitric acid.

In a still further aspect, the present invention relates also to an energy storage or delivery system comprising at least one redox-flow battery according to the first aspect of the present invention and at least one connection means apt to connect said at least one redox-flow battery to an external power source or to a load.

The advantages of the energy storage or delivery system according to this further aspect have been already outlined with reference to the above redox flow battery according to the first aspect of the invention and are not repeated herewith.

In further aspects, the present invention relates also to a method of storing electricity by means of the redox-flow battery according to the present invention, and to a method of delivering electricity by means of the redox-flow battery according to the present invention.

In particular, the present invention relates also to a method of storing electricity comprising the steps of:

a) providing a redox-flow battery according to the present invention;

b) electrically connecting said redox-flow battery to a power source;

and to a method of delivering electricity comprising the steps of:

a) providing a redox-flow battery according to according to the present invention;

b) electrically connecting said redox-flow battery to a load.

The advantages of the methods according to these further aspects have been already outlined with reference to the above redox flow battery according to the first aspect of the invention and are not repeated herewith.

Features and advantages of the invention will also appear more clearly from the following non-limiting examples.

**EXPERIMENTAL PART**

**Example 1**

The properties of the RFB according to the invention were studied by cyclic voltammetries.

A Gamry 3000 potentiostat (Framework software) was used for the test. The tests were conducted in a beaker, with 25 mL of solution. The working electrode (WE) was graphite, with an effective area of 2 $cm^2$. Titanium oxidation reaction was performed at the working electrode. The counter electrode (CE) was a platinum foil with an effective area of 2 $cm^2$. An Ag/AgCl/3M KCl reference electrode (RE) was placed near the working electrode. All electrodes were dipped in the same solution. Cyclic voltammetries were performed to test the following aqueous electrolytes:

A: (comparison): aqueous solution of $TiOSO_4$ (2 M) in 2 M $H_2SO_4$;

B: A + 3 mM sodium dodecyl sulphate (SDS);

C: A + 8.3 mM sodium dodecyl sulphate (SDS);

D: A + 10 mM sodium dodecyl sulphate (SDS);

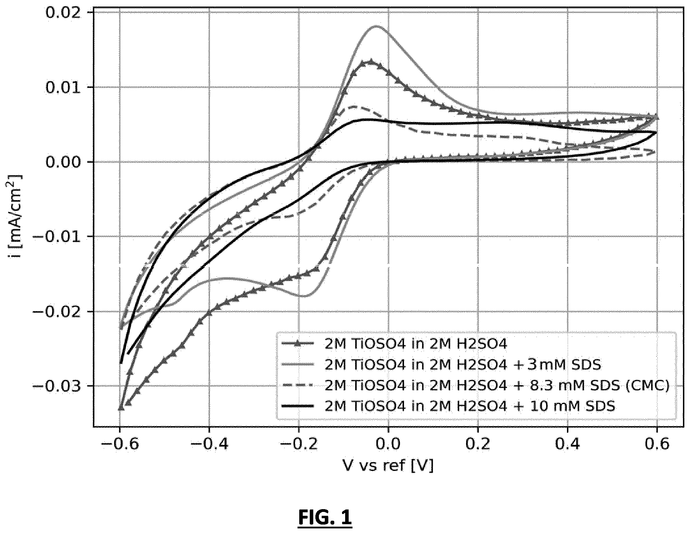

Figure 1 shows the different cyclic voltammetries recorded.

It can be seen from Figure 1 that with electrolyte B the SDS addition at a concentration lower than the critical micellar concentration for SDS (CMC =8.3 mM) was beneficial since hydrogen evolution reaction (HER) decreases and reversibility plus current intensity increase. Increasing the concentration until CMC (electrolyte C) brought to a decrease in current intensity, with no further decrease of HER onset. Exceeding CMC (electrolyte D), an anticipated onset of HER was observed.

## Example 2

Example 1 was repeated, using the following electrolytes:

E: aqueous solution of $TiOSO_4$ (4 M) (pH = 0);

F: E + 1 mM sodium dodecyl sulphate (SDS);

G: E + 3 mM sodium dodecyl sulphate (SDS);

H: E + 7 mM sodium dodecyl sulphate (SDS).

In this case, Biologic VMP3 equipped with the Booster (EC Lab software) was used for the tests. The tests were conducted in a beaker, with 25 mL of solution. The working electrode was carbon cloth (CC) purchased from Zoltec, code Tm PX35 satin weave 08, with an effective area of 2 cm$^2$. Titanium oxidation reaction was performed at the working electrode. The counter electrode was graphite foil with an effective area of 4 cm$^2$. An Ag/AgCl/3M KCl reference electrode was placed near the working electrode.

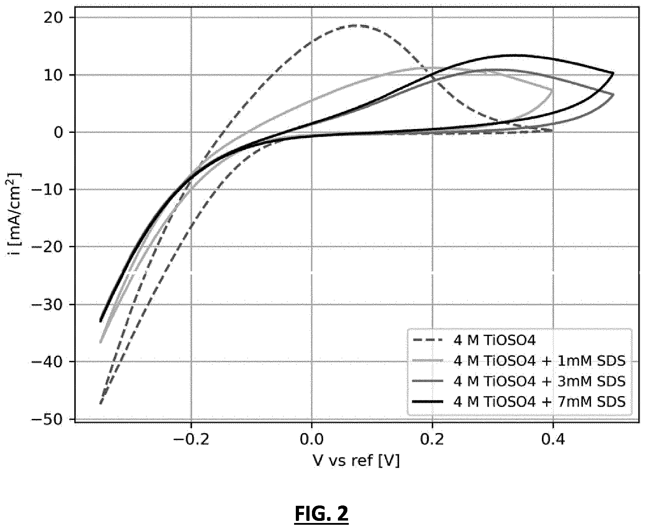

Figure 2 shows the different cyclic voltammetries recorded. This layout, with a CC as WE and graphite as CE, was employed to simulate a real battery condition. Only active species were dissolved in water, without addition of $H_2SO_4$. $H_2SO_4$ was used in example 1 to show the best condition in terms of reversibility.

Figure 2 shows that, of the three solutions, the lowest HER onset potential is achieved by adding 7 mM SDS.

## Example 3

Example 1 was repeated, using the following electrolytes:

I: aqueous solution of $TiOSO_4$ (0.5 M) in 3 M $H_2SO_4$;

J: I + 3 mM sodium decyl sulphate (DDS);

K: I + 3 mM sodium dodecyl sulphate (SDS);

M: I + 1 mM sodium octadecyl sulphate (SODS)

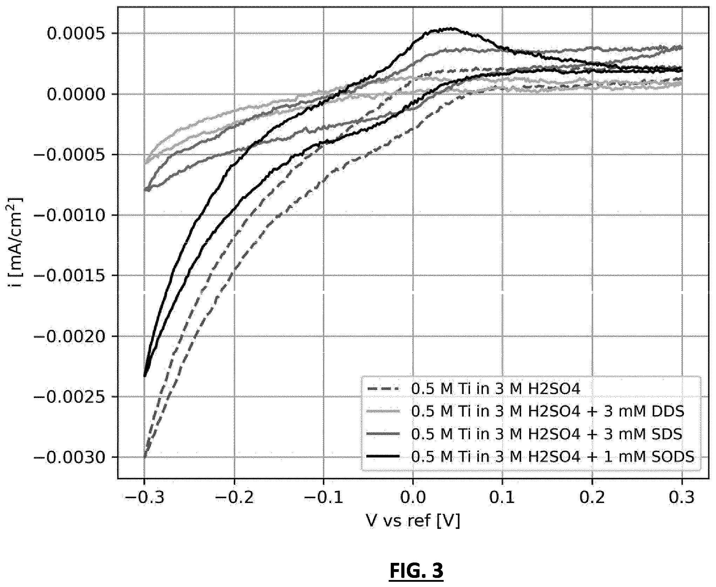

Figure 3 shows the different cyclic voltammetries recorded.

It can be seen from Figure 3 that three different alkyl sulfates have been tested with different carbon number on the tale (sodium decyl, dodecyl and octadecyl sulfate). All of them show reduction of HER to some extent. In particular, it looks like that the longer the tale, the lower this reduction. However, the conductivity varies the other way around (lowering the response of the redox couple). The best compromise is given by SDS. Tests were performed in highly acidic condition in order to maximize the effect on the reduction of HER, where this reaction is more favorite than in other media and therefore harder to minimize.

## Claims

1. A redox flow battery comprising an aqueous electrolyte comprising at least one titanium ion and at least one anionic surfactant, wherein said at least one anionic surfactant is at a concentration below the critical micellar concentration.

2. The redox flow battery according to claim 1, wherein said at least one titanium ion is selected from the group consisting of: trivalent titanium ion and tetravalent titanium ion.

3. The redox flow battery according to claim 1 or 2, wherein the concentration of said at least one titanium ion in the aqueous electrolyte is of from 0.1 to 5 M.

4. The redox flow battery according to any one of claims from 1 to 3, wherein the counter-ion of said at least one titanium ion is selected from the group consisting of $SO_4^{2-}$, $Cl^-$, $Br^-$, and $NO_3^-$.

5. The redox flow battery according to any one of claims from 1 to 4, wherein said anionic surfactant is an alkyl sulphate.

6. The redox flow battery according to claim 5, wherein said alkyl sulphate is selected from the group consisting of: sodium decyl sulphate, sodium dodecyl sulphate, sodium octadecyl sulphate.

7. The redox flow battery according to any one of claims from 1 to 6, wherein said aqueous electrolyte has a pH lower than or equal to 4.

8. The redox flow battery according to any one of claims from 1 to 7, including a first half-cell including a first electrode, a second half-cell including a second electrode, and a separator membrane arranged between said first and second half-cells, wherein said first half-cell is apt to circulate said aqueous electrolyte, and wherein said second half cell is apt to circulate an electrolyte comprising an electroactive species having a E° of at least 0.5 V higher than the E° of the redox reaction I:

$$Ti^{3+} + H_2O \rightleftarrows TiO^{2+} + 2H^+ + e^- \qquad (I).$$

9. The redox flow battery according to claim 8, wherein said electroactive species is selected from the group consisting of: manganese-containing species, halogen-containing species, iron-containing species, vanadium-containing species, cathecolamine, 5,8-dihydroxy-2,3-phthalazine and its derivatives, methylene blue, N-hydroxyphthalimide, chlorpromazine.

10. Use of an anionic surfactant at a concentration below its critical micellar concentration in an aqueous electrolyte comprising at least one titanium ion, for widening the electrochemical stability window, preventing hydrogen reactions to occur, and improving the reversibility of the redox reaction in said electrolyte.

11. The use according to claim 10, wherein said at least one titanium ion is selected from the group consisting of: trivalent titanium ion and tetravalent titanium ion.

12. The use according to any one of claims 10 and 11, wherein the counter-ion of said at least one titanium ion is selected from the group consisting of $SO_4^{2-}$, $Cl^-$, $Br^-$, $NO_3^-$.

13. The use according to any one of claims from 10 to 12, wherein said anionic surfactant is an alkyl sulphate.

14. A method of storing electricity comprising the steps of:

　　a) providing a redox-flow battery according to any one of claims 1 to 9;
　　b) electrically connecting said redox-flow battery to a power source.

15. A method of delivering electricity comprising the steps of:

　　a) providing a redox-flow battery according to any one of claims 1 to 9;
　　b) electrically connecting said redox-flow battery to a load.

**Patentansprüche**

1. Redox-Durchflussbatterie, die einen wässrigen Elektrolyt umfasst, der mindestens ein Titanion und mindestens ein anionisches Tensid umfasst, wobei das mindestens eine anionische Tensid in einer Konzentration unterhalb der kritischen Mizellbildungskonzentration vorliegt.

2. Redox-Durchflussbatterie nach Anspruch 1, wobei das mindestens eine Titanion aus der Gruppe ausgewählt ist, die besteht aus: dreiwertigem Titanion und vierwertigem Titanion.

3. Redox-Durchflussbatterie nach Anspruch 1 oder 2, wobei die Konzentration des mindestens einen Titanions in dem wässrigen Elektrolyt 0,1 bis 5 M beträgt.

4. Redox-Durchflussbatterie nach einem der Ansprüche 1 bis 3, wobei das Gegenion des mindestens einen Titanions aus der Gruppe ausgewählt ist, die aus $SO_4^{2-}$, $Cl^-$, $Br$ und $NO_3^-$ besteht.

5. Redox-Durchflussbatterie nach einem der Ansprüche 1 bis 4, wobei das anionische Tensid ein Alkylsulfat ist.

6. Redox-Durchflussbatterie nach Anspruch 5, wobei das Alkylsulfat aus der Gruppe ausgewählt ist, die besteht aus: Natriumdecylsulfat, Natriumdodecylsulfat, Natriumoctadecylsulfat.

7. Redox-Durchflussbatterie nach einem der Ansprüche 1 bis 6, wobei der wässrige Elektrolyt einen pH von weniger oder gleich 4 aufweist.

8. Redox-Durchflussbatterie nach einem der Ansprüche 1 bis 7, die eine erste Halbzelle mit einer ersten Elektrode, eine zweite Halbzelle mit einer zweiten Elektrode und eine Trennmembran umfasst, die zwischen der ersten und zweiten Halbzelle angeordnet ist, wobei die erste Halbzelle dazu geeignet ist, den wässrigen Elektrolyt zu zirkulieren, und wobei die zweite Halbzelle dazu geeignet ist, einen Elektrolyt zu zirkulieren, der eine elektroaktive Spezies mit einem E° umfasst, das mindestens 0,5 V höher ist als das E° der Redoxreaktion I:

$$Ti^{3+} + H_2O \rightleftarrows TiO^{2+} + 2H^+ + e^- \qquad (I).$$

9. Redox-Durchflussbatterie nach Anspruch 8, wobei die elektroaktive Spezies aus der Gruppe ausgewählt ist, die besteht aus: manganhaltigen Spezies, halogenhaltigen Spezies, eisenhaltigen Spezies, vanadiumhaltigen Spezies, Katecholamin, 5,8-Dihydroxy-2,3-phthalazin und dessen Derivaten, Methylenblau, N-Hydroxyphthalimid und Chlorpromazin.

10. Verwendung eines anionischen Tensids in einer Konzentration unterhalb seiner kritischen Mizellbildungskonzentration in einem wässrigen Elektrolyt, der mindestens ein Titanion umfasst, zur Erweiterung des elektrochemischen Stabilitätsfensters, zur Verhinderung von Wasserstoffreaktionen und zur Verbesserung der Reversibilität der Redoxreaktion in dem Elektrolyt.

11. Verwendung nach Anspruch 10, wobei das mindestens eine Titanion aus der Gruppe ausgewählt ist, die besteht aus: dreiwertigem Titanion und vierwertigem Titanion.

12. Verwendung nach einem der Ansprüche 10 bis 11, wobei das Gegenion des mindestens einen Titanions aus der Gruppe ausgewählt ist, die aus $SO_4^{2-}$, $Cl^-$, $Br^-$, $NO_3^-$ besteht.

13. Verwendung nach einem der Ansprüche 10 bis 12, wobei das anionische Tensid ein Alkylsulfat ist.

14. Verfahren zum Speichern von Elektrizität, umfassend die Schritte:

   a) Bereitstellen einer Redox-Durchflussbatterie nach einem der Ansprüche 1 bis 9;
   b) elektrisches Verbinden der Redox-Durchflussbatterie mit einer Stromquelle.

15. Verfahren zum Abgeben von Elektrizität, umfassend die Schritte:

   a) Bereitstellen einer Redox-Durchflussbatterie nach einem der Ansprüche 1 bis 9;
   b) elektrisches Verbinden der Redox-Durchflussbatterie mit einer Last.

**Revendications**

1. Batterie à flux redox comprenant un électrolyte aqueux comprenant au moins un ion titane et au moins un tensioactif anionique, dans laquelle ledit au moins un tensioactif anionique est à une concentration inférieure à la concentration micellaire critique.

**2.** Batterie à flux redox selon la revendication 1, dans laquelle ledit au moins un ion titane est choisi dans le groupe constitué par : l'ion titane trivalent et l'ion titane tétravalent.

**3.** Batterie à flux redox selon la revendication 1 ou 2, dans laquelle la concentration dudit au moins un ion titane dans l'électrolyte aqueux est comprise entre 0,1 et 5 M.

**4.** Batterie à flux redox selon l'une quelconque des revendications 1 à 3, dans laquelle le contre-ion dudit au moins un ion titane est choisi dans le groupe constitué de $SO_4^{2-}$, $Cl^-$, $Br$, et $NO_3^-$.

**5.** Batterie à flux redox selon l'une quelconque des revendications 1 à 4, dans laquelle ledit tensioactif anionique est un alkylsulfate.

**6.** Batterie à flux redox selon la revendication 5, dans laquelle ledit alkylsulfate est choisi dans le groupe constitué par : le décylsulfate de sodium, le dodécylsulfate de sodium, l'octadécylsulfate de sodium.

**7.** Batterie à flux redox selon l'une quelconque des revendications 1 à 6, dans laquelle ledit électrolyte aqueux a un pH inférieur ou égal à 4.

**8.** Batterie à flux redox selon l'une quelconque des revendications 1 à 7, incluant une première demi-cellule incluant une première électrode, une deuxième demi-cellule incluant une deuxième électrode, et une membrane séparatrice disposée entre lesdites première et deuxième demi-cellules, dans laquelle ladite première demi-cellule est apte à faire circuler ledit électrolyte aqueux, et dans laquelle ladite deuxième demi-cellule est apte à faire circuler un électrolyte comprenant une espèce électroactive ayant un E° d'au moins 0,5 V supérieur à l'E° de la réaction redox I :

$$Ti^{3+} + H_2O \rightleftarrows TiO^{2+} + 2H^+ + e^- \qquad (I).$$

**9.** Batterie à flux redox selon la revendication 8, dans laquelle ladite espèce électroactive est choisie dans le groupe constitué par : les espèces contenant du manganèse, les espèces contenant de l'halogène, les espèces contenant du fer, les espèces contenant du vanadium, la catécholamine, la 5,8-dihydroxy-2,3-phtalazine et ses dérivés, le bleu de méthylène, le N-hydroxyphtalimide, la chlorpromazine.

**10.** Utilisation d'un tensioactif anionique à une concentration inférieure à sa concentration micellaire critique dans un électrolyte aqueux comprenant au moins un ion titane, pour élargir la fenêtre de stabilité électrochimique, empêcher que des réactions de l'hydrogène se produisent et améliorer la réversibilité de la réaction redox dans ledit électrolyte.

**11.** Utilisation selon la revendication 10, dans laquelle ledit au moins un ion titane est choisi dans le groupe constitué par : l'ion titane trivalent et l'ion titane tétravalent.

**12.** Utilisation selon l'une quelconque des revendications 10 et 11, dans laquelle le contre-ion dudit au moins un ion titane est choisi dans le groupe constitué par $SO_4^{2-}$, $Cl^-$, $Br$, $NO_3^-$.

**13.** Utilisation selon l'une quelconque des revendications 10 à 12, dans laquelle ledit tensioactif anionique est un sulfate d'alkyle.

**14.** Procédé de stockage d'électricité comprenant les étapes suivantes :

a) fournir une batterie à flux redox selon l'une quelconque des revendications 1 à 9 ;
b) relier électriquement ladite batterie à flux redox à une source d'alimentation.

**15.** Procédé de distribution d'électricité comprenant les étapes suivantes :

a) fournir une batterie à flux redox selon l'une quelconque des revendications 1 à 9 ;
b) relier électriquement ladite batterie à flux redox à une charge.

**FIG. 1**

**FIG. 2**

**FIG. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105470508 A

- JP 2016103386 A

**Non-patent literature cited in the description**

- **J. NOACK et al.** *Angewandte Chemie Int. Ed.*, 2015, vol. 54, 9776-9809